# EUROPEAN PATENT APPLICATION

(11) **EP 4 765 540 A1**
(43) Date of publication of application: **24.06.2026**
(21) Application number: 25220845.9
(22) Date of filing: 04.12.2025
(51) Int. Cl.: H02J 1/10, E02F 9/20, H02J 1/14, H02J 7/34, H02J 9/08

(54) **SELF-PROPELLED OPERATING MACHINE**

(30) Priority: 19.12.2024 IT 202400029253
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described is an operating machine (1) provided with: an electrical system (2), a plurality of user devices powered by the electrical system, including an electric motor (21, 22) set up to supply the power required by one or more other user devices, an electrical charge storage device (3) connected or connectable to the system (2) and arranged to power the user devices of the machine (1), a control element which can be operated by an operator to control the operation of one or more user devices and an electronic processing unit comprising a power management module (41) configured to adjust a power delivered to the user devices as a function of at least one safety threshold of a power which can be delivered by the storage device (3). At least one generator unit (26) connected or connectable to the electrical system (2) is made available and in addition the power management module (41) is configured to adjust the operation of the generator unit (26) so that it can power the storage device (3) and/or the user devices, through the system (2), based on a power requested by the user devices themselves.

## Description

This invention relates to a self-propelled operating machine.

In detail, the invention relates to an operating machine with an electric or hybrid power supply, such as a telescopic handler(or "telehandler") or an aerial work platform or similar machines.

There are prior art electric telehandlers, provided with an electric motor, powered by one or more batteries, in place of the traditional internal combustion engine, which have the advantage of not diffusing exhaust gas in the environments in which they work.

It is also known that the power that can be delivered from the battery is limited by safety thresholds, both with regard to short-term delivery as pulsed power and with regard to medium / long-term delivery as constant power.

However, during the use of the machine, circumstances may occur in which those safety limits constitute an obstacle to the effective performance of the work which the vehicle must carry out.

Consider, for example, the case in which the telehandler must travel along a prolonged incline. For a very short time it will be possible to request the battery to deliver a power, in pulsed mode, which will be sufficient to give the initial start. However, the maximum limit for constant power is lower than that for pulsed power. Therefore, after the initial movement, the machine, and therefore the operator, will necessarily experience a drop in power that will make it difficult to complete the ascent.

The problem also arises in cases where a particularly intense instantaneous power is required, such as the handling of a load in particularly disadvantageous conditions or in the presence of multiple power requests from multiple user devices, the execution of which would require a power that exceeds the limit imposed on the discharge in power of the battery mounted on the vehicle.

The technical purpose which forms the basis of the invention is to provide a self-propelled operating machine which overcomes the limits of the prior art. The specified technical task is achieved by an operating machine made according to one or more of the accompanying claims.

Further features and advantages of the present invention are more apparent in the non-limiting description of a preferred embodiment of the proposed telehandler, as illustrated in the accompanying drawings, in which:

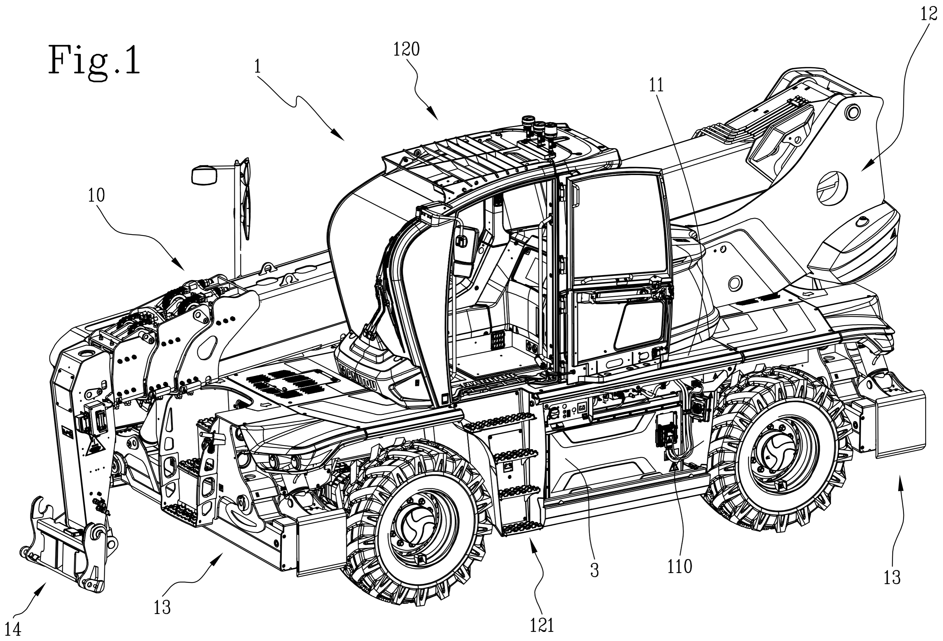

- Figure 1 is a perspective side view of a machine according to the invention, in an operating condition in which it carries a battery on board; and
- Figure 2 is a diagram of the power circuit of the machine of Figure 1.

With reference to the accompanying drawings, reference numeral '1' denotes in its entirety a self-propelled operating machine realized according to the invention.

The proposed machine 1 may consist of or comprise a telescopic lift or aerial platform or similar work vehicles and is provided with an electric propulsion system.

The machine 1 shown in the drawings is a telescopic handler 1 (or telehandler) of the so-called "rotary" type, provided with an undercarriage 11, movable on wheels, on which is fixed a rotary turret 12 which mounts the driver's cab 120 and to which is hinged a telescopic operating boom 10. The boom 10 is provided, at its distal end, with a removable attachment (not shown). The term 'attachment' means both an accessory for engaging a load, such as a fork, an arm equipped with hooks, a winch, a gripper, etc. and an accessory for lifting persons and, if necessary, also a load, such as a load cage.

So, one of the characteristics of this type of machine, unlike aerial work platforms, is the possibility of changing the attachment depending on the job.

Still more in detail, the boom 10 may have, at its distal end, a coupling device 14, also of the type normally in use in the machines manufactured by the Applicant, which allows the replacement of the attachment and the connection thereof to the hydraulic and electronic apparatuses of the machine 1.

Optionally, the undercarriage 11 may also be provided with outriggers 13 comprising a plurality of stabilising arms; for example, the machine 1 may be provided with so-called "scissor-like" outriggers.

According to certain embodiments, in place of the wheels there may be tracks or other locomotion apparatus.

The boom 10 is articulated so as to oscillate vertically, under the actuation of at least one hydraulic cylinder or a similar actuator, between a lower position, substantially horizontal, and an upper position wherein the boom 10 is close to the vertical. The boom 10 is extensible and retractable and, more precisely, comprises a plurality of segments inserted one in the other, coaxial with one another and suitable for translating along the axial direction. The elongation and retraction of the boom 10 are also produced by one or more hydraulic cylinders, or other actuators, or also by a telescopic cylinder (or other actuator with several stages).

The machine 1 may also comprise an electro-hydraulic distributor (not shown) to which are individually connected the hydraulic actuators used in the machine 1, according to known methods. The distributor is preferably fed by a pump 28 driven by a dedicated motor 22, which are placed on board the machine 1. However, embodiments of the invention in which one or more of the above-mentioned actuators are of the electric type instead of hydraulic are not excluded.

However, it should be noted that the invention can be used with a different type of operating machine, which is however generally provided with a high voltage electrical system.

In particular, the proposed machine 1 could also be a "fixed" type telescopic handler, that is to say, without the rotary turret, in which the cab and the boom are carried directly by the frame which rests on the ground on the wheels.

The machine 1 includes a control unit which is designed to transmit control signals to the distributor which consequently commands the actuators, in such a way that they operate the boom 10, the stabilizers 13, the translation motor 21 and other devices included in the machine 1, according to the commands issued by the operator who sits in the cab 120.

In practice, the machine 1 includes in the relative cab 120, available to the operator, commands such as joystick, pedals, pushbuttons, touchscreens etc; when the operator acts on the commands, the control unit generates control signals which are received by the distributor, which then adjusts consequently the operation of each actuator of the boom 10, of the stabilizers, of the accessory etc.

In addition, the invention may, if necessary, comprise the use of a remote control which comprises commands which correspond functionally to those present in the cab 120 and it is designed to transmit control signals to a receiver which is connected to the processing unit.

In practice, the control unit transmits control signals to the distributor which consequently commands the hydraulic actuators of the machine 1 in accordance with certain conditions.

In the case of electric actuators, the operation is the same, except that the control signals of the control unit are sent directly to the actuators, since the distributor is not necessary.

The machine 1 according to the invention may comprise at least one electric drive motor 21, for example positioned at one of the axles and another electric motor 22 for driving the hydraulic pump which powers, using the distributor, the movement cylinders of the boom 10 and, if necessary, the motorized slewing ring of the turret 12.

In more general terms, the machine includes at least one motor for delivering a power required by the user devices of the machine, which are, in particular, the pump and the propulsion system apparatus that allows the translation of the vehicle. The user devices are controlled by at least one control element that can be operated by the operator, which can be one of the controls present in the cab and mentioned above.

The proposed machine 1 may be advantageously provided with one or more housing seats, for example in the form of containment compartments 110, designed for the energy sources 3 which electrically power at least the drive motor 21 and/or the motor of the pump 22. The housing seats preferably comprise two compartments 110 made in the undercarriage 11. A possible energy source may be an energy storage device such as, for example, an electric battery 3.

According to a preferred aspect, described in European patent application No. 21212736 by the Applicant, when the charge of a battery 3 runs out, the respective compartment 110 is opened, the exhausted battery 3 is extracted and replaced with a charged battery 3. If the machine 1 carries a second battery 3 on board, it can continue scheduled operations using the energy stored in that battery, until it is necessary to replace it or mount and connect another battery 3.

Further features of this version of the invention are illustrated in the above-mentioned patent application, which is to be understood as incorporated herein with regard to the ability to replace the battery 3 or the batteries.

A possible version of the machine 1 is described in European patent application No. 22181031 by the Applicant, which relates to the ability to switch the power means of the vehicle, in relation to which that application is intended to be incorporated herein by reference.

According to this version, two types of electricity supply sources are available: electric batteries 3 and electricity generator units 26. In detail, the invention uses one or more electric batteries 3, each suitable for being inserted/extracted in/from one of the compartments 100 and at least one electricity generator unit 26 suitable for being inserted/extracted in/from one of the compartments 110. The electricity generator unit 26 may be designed for producing electricity by consuming fossil fuel, for example it may be an electricity generator set, or it may be a fuel cell or other apparatus which, starting from some form of fuel, produces electricity.

According to this preferred embodiment, the machine 1 is provided with two alternative power supply configurations, which can be switched by the action of a user:
- a fully electrical configuration wherein the power supply means include only one or more electric batteries 3; and
- a hybrid configuration wherein the above-mentioned power supply means include the electricity generator unit 26.

To be precise, the apparatus can be arranged for recharging the energy storage device.

Further details of this configuration are described in the above-mentioned European patent application No. 22181031.

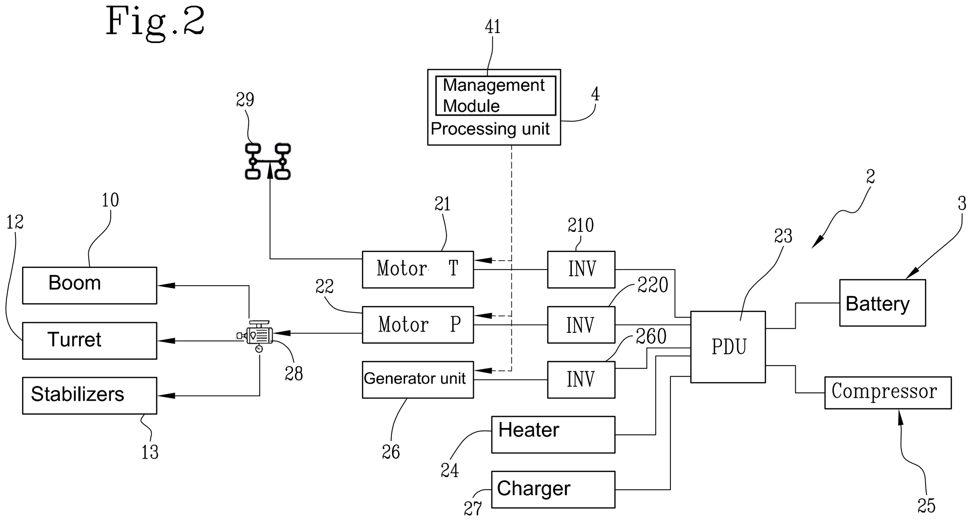

In more general terms, the proposed machine 1 comprises at least one high-voltage electrical system 2 (shown schematically in Figure 2), that is, an electrical system comprising or connected to at least one electric motor and at least one electric charge storage device 3 for powering the motor 21, 22 (or the motors). Reference will be made below, by way of example but without limiting the scope of the invention, to the case where the storage device is a battery 3.

In the event that the machine 1 has two motors 21, 22, as in the example described above, one or more storage devices 3 connected to the system 2 will power both. When reference is made below to a 'battery', what will be declared will apply both to a single battery, formed for example by several modules, and to a plurality of batteries.

Preferably, the high voltage system 2 includes a power distribution unit 23 ("PDU") which connects the storage device 3 to the motor 21, 22 (or to the motors) and other electronic devices powered by the system 2. More in detail, the system 2 connects the distribution unit 23 to the inverters 210, 220 which drive the motors 21, 22. The proposed machine 1 may include one or more of the following user devices powered by the high-voltage system 2: the cabin air conditioning system, that is, the heater 24 and the air conditioning compressor 25, an on-board electric charger 27, for charging the storage device 3 via the national electricity grid (or other similar sources) and a DC-DC converter for charging the 24 Volt battery. The above list is not necessarily exhaustive. The generator unit 26 is also controlled by a respective inverter 260.

More generally, the electrical power system 2 is connected to a plurality of user devices that can be powered by the storage device 3. Among these user devices is the electric motor 21, 22, which drives secondary user devices such as the transmission 29, the operating boom 10, the rotating turret 12 and the stabilizers 13.

The user devices are therefore divisible between primary user devices, such as for example the motor 21, 22 (or the motors), the heater 24, the compressor 25, the on-board electric charger 27, the DC-DC converter and secondary user devices driven by the motor.

The machine 1 includes an electronic processing unit 4 which, in particular, controls the motor (or motors) intended to operate the secondary user devices of the machine itself. The processing unit 4 comprises a power management module 41 configured to adjust a power delivered to the user devices as a function of at least one safety threshold of a current deliverable from the storage device 3 to the power plant 2. Preferably, for reasons that will become clear below, the processing unit 4 also controls the generator unit 26.

In particular, the management module 41 is configured to adjust the power supplied by the motor 21, 22 to the secondary user devices according to the above-mentioned safety threshold. For example, in the case wherein the storage device 3 is a battery, it may have two safety thresholds, namely a pulsed current discharge threshold and a constant current discharge threshold, the latter being lower than the first. These are functional characteristics that are commonly found in batteries intended to power vehicles, as already explained in the description of the prior art.

For this reason, the proposed machine 1 is provided with a power management module 41 that adjusts the current supplied to the motor 21, 22 by the storage device 3 also as a function of the value of the safety threshold, or of the safety thresholds in the case of more than one as for the batteries referred to in the previous paragraph.

To be precise, the management module 41 is preferably configured to adjust the operation of the motor or motors 21, 22 in such a way that the current emitted by the storage device 3 is equal to or lower than the safety threshold or thresholds, so as to preserve its integrity.

More generally, the management module 41 is configured to adjust the operation of the user devices, including the motor 21, 22 in such a way that the storage device 3 does not deliver a current greater than that of the safety threshold or thresholds.

In fact, the power demand of all the user devices must be met by the storage device 3, if there is no other source of energy; the demand from secondary user devices is however the one that, during the use of the machine 1 in working activities, determines the greatest variations in the consumption of electricity accumulated in the battery 3 or other similar device. Therefore, the adjustment of the operation of the motor 21, 22 by the processing unit 4 and in particular by the management module 41 is decisive in order to prevent the storage device 3 from being damaged.

In detail, the management module 41 is configured to limit the power that can be delivered by the motor 21, 22 so that it is lower than a maximum safety power, which is a function of the safety threshold or thresholds defined above. For example, the maximum safety power may be equal to that which the motor 21, 22 delivers supplied with a current equal to that of the threshold. If the thresholds are more than one, respective maximum safety powers will be provided.

Even more in detail, the power delivered by the motor 21, 22 (or by the motors) depends on the total power required by the user devices of the motor 21, 22, or the above-mentioned secondary user devices, such as the pump 28 or the transmission 29, which in turn depends on the request established by the operator through the commands, depending on the operations that the machine 1 must perform, such as moving a load, operating the stabilizers, rotating the turret, moving, etc... More generally, the power delivered by the motor 21, 22 depends on the instantaneous operating conditions of the machine 1.

The management module 41 limits the power that can be delivered by the motor 21, 22 to the user devices, which varies with the demand, that is, the operating conditions, so as to prevent the current discharged from the battery (or other storage device 3) from reaching or exceeding the safety threshold value (or one of the thresholds). In the case of the battery 3, the management module 41 is configured so that, regardless of the demand, the instantaneous current input to the system 2 by the battery 3 itself is always lower than (or equal to) the pulsed current threshold and/or the constant current threshold.

For this reason, the current introduced by the storage device 3 into the system 2 is established by the processing unit 4 according to the request of the user devices; in detail, the processing unit 4 controls the motor 21, 22 (or the motors) according to the demand of the secondary user devices, established by the operator, and also according to the safety threshold or thresholds.

Possible secondary user devices of the machine include one or more of the following: transmission 29, boom 10, turret 12 and stabilizers 13. This list is not necessarily exhaustive. In the event that the machine 1 uses hydraulic actuators, the boom 10, the turret 12 and the stabilizers 13 are driven by the supply of the pump and of the distributor by the motor 21, 22.

According to an important aspect of the invention, the power management module 41 is also configured to adjust the power supply of the storage device 3 or of the user devices, including the motor 21, 22, by the generator unit 26, based on the power demand by the user devices.

In other words, the management module 41 adjusts the operation of the generator unit 26 so that it supplies the system 2 with power, in the form of electric current, which is a function of the demand of the user devices, including the motor 21, 22.

In practice, based on the power demand by the user devices, which depends on the control exercised by the operator through one or more control elements and based on the value of the maximum safety power, that is, on the value of the safety threshold (or thresholds), the management module 41 allows the generator unit 26 to recharge the storage device 3 or to power the user devices themselves, including the motor 21, 22 that drives the secondary user devices. Furthermore, preferably, the management module 41 powers the storage device 3 and/or the user devices according to different operating modes of the machine 1 that can be set by the operator and/or switched automatically, according to instructions recorded in a memory module of the processing unit 4. This aspect will be mentioned again below.

Note that the processing unit 4 is presented as subdivided into functional modules for the sole purpose of clearly and completely describing its functionalities. In practice, the processing unit 4 may consist of an electronic device, also of the type commonly present on this type of machines, such as the control unit mentioned above, suitably programmed to perform the functions described. The various modules can correspond to hardware units and/or software routines forming part of the programmed device. The functions can be performed by a plurality of electronic devices on which the above-mentioned functional modules can be distributed.

Generally speaking, the processing unit 4 may have one or more microprocessors or microcontrollers for execution of the instructions contained in the memory modules and the above-mentioned functional modules may also be distributed on a plurality of local or remote calculators based on the architecture of the network in which they reside.

Preferably, the processing unit 4 can be configured to apply a support mode of operation, in which the management module 41 simultaneously allows the generator unit 26 and the storage device 3 to power the motor 21, 22 so that it delivers a power that, added to the power of the other primary user devices, is also higher than the maximum safety power, as defined above. More generally, in the support mode of operation, the power supplied by the system 2 to the user devices may be greater than the maximum safety power, defined above. The management module 41 adjusts the operation of the generator unit 26 so that the power supplied by it added to that supplied by the storage device 3 can be greater than the maximum safety power.

In other words, in this case, the management module 41 is configured so that the motor 21, 22 can also be powered by a current that is greater than the maximum that can be provided by the continuous or pulsed battery 3 (or other storage device), without its integrity being at risk.

For this reason, the invention satisfies an increased demand for power by the user devices, as in the examples indicated in the description of the prior art, even if the necessary current is greater than the maximum safe discharge current of the storage device 3 mounted on board the machine 1, that is, the current corresponding to the safety threshold.

In fact, the system 2 will receive current from both the storage device 3 and the generator unit 26 and the sum of the two currents may be greater than the maximum safe discharge current of the device 3.

As will be described in more detail below, the support mode can be activated automatically or requested by the operator.

According to a further preferred aspect, the management module 41 can be configured to allow the generator unit 26 to: charge the storage device 3, when it delivers a power greater than the power required by the motor 21, 22 and by the other primary user devices. As mentioned, the demand for the motor 21, 22 is determined by the power necessary to operate the secondary user devices in accordance with the operation of the commands by the operator.

Furthermore, preferably, the processing unit 4 can be configured to apply a preservation mode of operation, wherein the management module 41 simultaneously allows both the generator unit 26 and the storage device 3 to power the motor 21, 22 and the other primary user devices, in such a way that the current delivered by the storage device 3 does not exceed a preservation threshold lower than the safety threshold.

In other words, with the same power supplied to the user devices and in particular to the motor 21, 22, it is possible to use current emitted in the system 2 by the generator unit 26 in compensation for a reduction in the current drawn from the battery 3.

This mode allows the battery 3 (or other storage device 3) to operate in a current delivery regime that is different, that is, not close, to the safety threshold or thresholds, so as to prolong the life of the battery 3 itself. The preservation threshold is chosen according to the safety thresholds and the specific battery 3 used.

More generally, the invention provides for defining a preset threshold for the power that can be delivered by the storage device 3 and for adjusting the operation of the generator unit 26 as a function of the power demand of the user devices and the preset threshold.

In this case, the management module 41 is configured to adjust the operation of the generator unit 26 so that it and the storage device 3 can power the motor 21, 22 and the other primary user devices, so that the current delivered by the storage device 3 does not exceed the above-mentioned predetermined threshold.

The preset threshold can be selected or set by the operator or be determined automatically by the processing unit 4.

Preferably, the machine 1 comprises interface means connected to the processing unit 4 and which can be operated by an operator to control the power management module 41. In detail, the interface means may comprise a touch screen or one or more buttons or other commands which can be operated by the operator. The interface means may be configured to switch the operating mode of the machine 1, for example from support mode to preservation mode.

It is also possible that the operating mode is switched automatically according to instructions contained in the memory module or that it is switched automatically depending on a selection made by the operator on the interface means.

Examples of operation of the machine 1 according to the invention are described below.

Firstly, the machine 1 can operate powered exclusively by the battery 3, without the use of generators or similar generator units 26. In this case, the current delivered by the battery 3 to the two motors 21, 22 (if both are present) will never exceed the safety thresholds of pulsed current and constant current and the autonomy is limited by the energy stored in the battery 3.

In the event that the machine 1 mounts a generator unit 26, this can be used to charge the battery 3. In this case, the above-mentioned interface can be configured to turn on or off the generator unit 26 (considering, for example, an electric diesel generator), based on the consumption of the charge of the battery 3 and based on the required autonomy. For example, it can be foreseen that this function is activated by selecting a button or key that bears the words "Battery recharge".

The possibility is not excluded that the processing unit 4 is also configured to automatically turn on or off the generator unit 26 according to a predefined work program (for example, which can be set by the user), depending on the instantaneous state of charge of the battery 3 and/or the required autonomy.

More in detail, the apparatus can also be started automatically.

In this case, the invention may provide for a preliminary phase in which, before its use and after its start-up, that is, before it begins to supply power, the generator unit 26 is set up for its optimal operation with the power circuit 2 and the user devices.

For example, in the event that the generator unit 26 is a generator provided with an endothermic motor and an electric generator connected to it, the management module can provide for the automatic switching on of the internal combustion engine until the optimal operating conditions are reached, identified by rotation regime and operating temperature, so as to ensure that the generator unit is immediately ready to deliver the required power.

In addition, or alternatively, the internal combustion engine can be placed in operation by the management module without applying an electrical load, thus making it "idle"; the load is only applied when there is a power supply demand.

Additionally, the user can select the above-mentioned support mode of operation, for example by pressing a button or key on the screen with the words "Rex booster" or other. If the apparatus is switched off, the selection of this operating mode can turn it on automatically (if it is of the type that turns on or off). In this case, this function can also be selected by an operator, by pressing, for example, a button or a key on the screen with the words "auto booster". Alternatively, it is possible to restrict the use of the support mode to the switching on of the generator unit 26 by the operator. In this mode of operation, whenever the user devices require more than the maximum safety power, the generator unit 26 or other apparatus and the battery 3 will together supply the motors 21, 22 with the current necessary to meet the demand.

As already explained, it can be foreseen that, when the demand falls below the power level dispensed by the generator unit 26, the latter charges the battery 3.

Finally, when the work does not require peaks in intensity of the use of user devices, the operator can select the preservation mode of operation through the interface, so that the battery 3 wears as little as possible.

The invention is also configured as a method for managing the operation of an operating machine 1 that can be as described above, also in terms of its optional aspects.

The method provides that the generator unit 26 powers the storage device 3 or the motor 21, 22 as a function of a power required by the user devices.

In detail, it is possible that the generator unit 26 and the storage device 3 together power the motor 21, 22 so that it delivers a power with a value higher than that which it delivers when it receives from the storage device 3 a current equal to said safety threshold.

More generally, the method may provide that the generator unit 26 and the storage device 3 deliver to an electrical system 2 that connects them to the motor 21, 22 and the other user devices a power greater than that which corresponds to the safety threshold of the device 3.

Furthermore, the generator unit 26 can be foreseen to charge the storage device 3 when it delivers a power that is higher than that required by the user devices.

Further, according to the method of the invention, the electricity generator unit 26 and the storage device 3 can power together the motor 21, 22 in such a way that the current dispensed by the storage device 3 does not exceed a preservation threshold lower than the safety threshold. Also in this case, the current dispensed by the storage device 3 is determined by the demand of all the user devices.

The method may also provide that the generator unit 26 is operated automatically following the reaching of a predetermined level of power demand by the user devices. In detail, the apparatus can also be started automatically. The automatic start modes can be those already described above.

## Claims

1. An operating machine (1) provided with: an electrical system (2), a plurality of user devices powered by the electrical system, including at least one electric motor (21, 22) set up to supply the power requested by one or more other user devices, at least one device (3) for storing the electrical charge connected or connectable to the system (2) and set up to supply the user devices of the machine (1), at least one control element which can be operated by an operator to control the operation of one or more user devices and an electronic processing unit comprising a power management module (41) configured to adjust a power supplied to the user devices as a function of at least one safety threshold of a power which can be supplied by the storage device (3); wherein at least one electricity generator unit (26) connected or connectable to the electrical system (2) is provided and wherein said power management module (41) is also configured to adjust the operation of the electricity generator unit (26) in such a way that it can supply the storage device (3) and/or the user devices, by means of the above-mentioned system (2), on the basis of a power requested by the user devices.

2. The machine (1) according to the preceding claim, wherein the management module (41) is configured for adjusting the operation of the electricity generator unit (26) in such a way that the electrical system (2) can receive from the storage device (3) and from the electricity generator unit (26) a power value greater than that which it receives from the storage device (3) when it supplies a current equal to said safety threshold.

3. The machine (1) according to any preceding claim, wherein the management module (41) is configured to simultaneously allow both the electricity generator unit (26) and the storage device (3) to supply the system (2) in such a way that the current supplied by the storage device (3) does not exceed a threshold lower than the safety threshold.

4. The machine (1) according to any preceding claim, comprising interface means which can be operated by an operator and designed for controlling the power management module (41).

5. The machine (1) according to any preceding claim, wherein the electricity generator unit (26) is of the type which can be switched on or off and wherein the processing unit (4) is configured to switch on the unit as a function of a power requested by the user device.

6. The machine (1) according to any preceding claim, wherein the storage device (3) is an electric battery, subject both to a safety threshold of the discharged pulsed current and a safety threshold of the constant current.

7. The machine (1) according to any preceding claim, wherein the electricity generator unit (26) is a engine-generator or a fuel cell or a solar panel.

8. The machine (1) according to any preceding claim, comprising one or more of the following secondary user devices driven by the motor (21, 22): transmission (29), boom (10), turret (12), stabilizers (13).

9. A method for managing the operation of an operating machine (1) provided with at least one electric motor (21, 22), one or more user devices operated by the electric motor (21, 22), at least one device (3) for storing electric charge for powering the motor (21, 22) with a current limited by at least one safety threshold and at least one electricity generator unit (26), wherein the electricity generator unit (26) supplies the storage device (3) or the motor (21, 22) as a function of a power requested by the user devices operated by the motor.

10. The method according to the preceding claim, wherein the electricity generator unit (26) and the storage device (3) are connected to the motor (21, 22) by means of an electrical system (2) and they supply it with a power value greater than that which the system (2) receives from the storage device (3) a current equal to said safety threshold.

11. The method according to any one of claims 9 to 10, wherein the electricity generator unit (26) and the storage device (3) power together the motor (21, 22) in such a way that the current supplied by the storage device (3) does not exceed a preservation threshold lower than the safety threshold.

12. The method according to any one of claims 9 to 11, wherein the electricity generator unit (26) is activated automatically after reaching a predetermined level of request for power by the user devices.
